# EUROPEAN PATENT SPECIFICATION

(11) **EP 2 938 187 B1**
(45) Date of publication and mention of the grant of the patent: **27.09.2017**
(21) Application number: 13868525.0
(22) Date of filing: 27.12.2013
(51) Int. Cl.: A01N 1/02, A61K 38/48, A61K 31/375

(54) **SOLUTION FOR PRESERVING VASCULAR CONDUITS**
LÖSUNG ZUR ERHALTUNG VON GEFÄSSLEITUNGEN
SOLUTION POUR PRÉSERVER LES CONDUITS VASCULAIRES

(30) Priority: 31.12.2012 US 201261848349 P; 31.12.2012 US 201261848350 P
(43) Date of publication of application: 04.11.2015
(73) Proprietor: Somahlution, LLC, Jupiter, FL 33458 (US)
(72) Inventor: SURYAN, Mahendra, Wellington, FL 33411 (US); MENON, Satish, Jupiter, FL 33458 (US)
(74) Representative: Schlich, George
(86) International application number: PCT/US2013/078064
(87) International publication number: WO 2014/106091

(56) References cited:
- WO-A2-01/76364
- US-A- 4 837 021
- US-A- 5 871 477
- US-A1- 2007 110 740
- US-A1- 2012 264 103
- Aruga Masayoshi: "Kinetic Studies on Decomposition of Glutathione. II. Anaerobic Decomposition in Aqueous Solution", Chem. Pharm. Bull., 1980, pages 514-520, XP55284169, Retrieved from the Internet: URL:https://www.jstage.jst.go.jp/article/c pb1958/28/2/28_2_514/_pdf [retrieved on 2016-06-28]
- G. B. GOLUBITSKII ET AL: "Stability of ascorbic acid in aqueous and aqueous-organic solutions for quantitative determination", JOURNAL OF ANALYTICAL CHEMISTRY., vol. 62, no. 8, 2007, pages 742-747, XP055284259, US ISSN: 1061-9348, DOI: 10.1134/S1061934807080096

## Description

### RELATED APPLICATION

This application claims the benefit of and priority to prior filed pending Provisional Application Serial Nos. 61/848,350 and 61/848,349, both filed December 31, 2012.

### FIELD

The present invention is directed to formulations for preserving tissue and organ function and more particularly to shelf stable formulations for preserving tissue and organ function, in particular the function of vascular conduits, prior to implantation.

### BACKGROUND

Tissues and organs for implantation or transplantation in a subject are stored extra-corporeally in liquid formulations that preserve the function of the tissues and organs until implantation. Tissue and organ preserving formulations are known. One formulation of interest is described in U.S. Patent No. 7,981,596, which is incorporated by reference in its entirety. The tissue and organ preserving formulation described in U.S. Patent No. 7,981,596 is generally referred to in the literature as the GALA formulation, referencing glutathione, ascorbic acid and L-arginine. The GALA formulation is based on Hank's balanced saline solution (HBSS), a commercially available physiological salt solution containing D-glucose 1 g/L, calcium chloride (anhydrous) 0.14 g/l, potassium chloride 0.4 g/l, potassium phosphate 0.06 g/l, magnesium chloride hexahydrate 0.1 g/l, magnesium chloride heptahydrate 0.1 g/l, sodium chloride 8 g/l, sodium bicarbonate 0.35 g/l, and sodium phosphate 0.048 g/l. As disclosed in the '596 patent, ascorbic acid (vitamin C), reduced glutathione, L-arginine, and heparin are added to the HBSS. This solution provides free radical scavengers, antioxidants, a nitric oxide (NO) substrate, a reducing agent, an energy source (glucose), an anti-coagulant, and physiological concentrations of electrolytes and buffers.

US 2012/264103 and WO 01/76364 also describe the GALA formulation. In US 2012/026410 the formulation also includes citrulline, adenosine, creatine, glucose and carnitine, and/or insulin.

The shelf life of the GALA formulation is limited due to the instability of various components of the formulation. The relatively short shelf life of the GALA formulation can limit its usefulness. Thus, there is a need to improve the GALA formulation to improve the stability of its components and thereby lengthen its shelf life.

In a paper entitled "Kinetic studies on Decomposition of Glutathione. II. Anaerobic Decomposition in Aqueous Solution" in Chem. Pharm. Bull, 1 January 2980, pages 514-520, Aruga Masaoyshi demonstrates that decomposition of reduced glutathione takes place rapidly in acidic solution. The decomposition rate showed a minimum at a pH of 5-6, and a maximum at a pH of 8.5 and a plateau in the pH range of 10-12.

G. B. Golubitskii et al, describes in "Stability of ascorbic acid in aqueous and aqueous-organic solution for quantitative determination", Journal of Analytical Chemistry, vol. 62, no. 8, 1 August 2007, pages 742 - 747 the stability of ascorbic acid at different pH. In the pH range of 1.0 - 4.4 the decomposition rate increases, while at pH 5.4 - 7.2 it decreases.

### SUMMARY

Described herein are improvements to the GALA formulation having improved stability and increased shelf life over the original formulation. Also described are methods of using the improved formulations.

The present invention is premised on the realization that the stability of tissue preservation formulations, particularly the GALA formulation, can be improved by separating the formulation into a first solution having a pH of at least 7 and a second solution having a pH of less than 7. The first solution includes components with improved stability when stored at a pH of 7.0 or above, and the second solution includes components with improved stability when stored at a pH below 7.0. The first solution includes water, a balanced salt solution, a sugar such as D-glucose, and L-arginine at a pH of at least 7.0 and preferably at a pH that ranges from pH 7.0 to pH 8.5. The second solution includes water, ascorbic acid, and reduced glutathione at a pH of less than 7.0 and preferably from pH 6.9 to pH 2.8. At the point of use, the first and second solutions are mixed together to form a final formulation that can be used at a physiological pH of pH 7.4 to preserve the function of the tissue or organ. According to the invention there is provided a kit for preserving the function of a tissue or organ comprising:
a first container containing a first solution, wherein the first solution is comprised of water, a balanced salt solution, a sugar, and L-arginine and has a pH of at least 7.0;
a second container containing a second solution, wherein the second solution consists of water, reduced glutathione, and ascorbic acid and has a pH of below 4.0.
In a second aspect of the invention provides a method of preparing a formulation for preserving the function of a tissue or organ comprising:
providing a first solution wherein the first solution includes water, a balanced salt solution, a sugar, and L-arginine and has a pH of at least 7.0;
providing a second solution, wherein the second solution consists of water, reduced glutathione, and ascorbic acid and has a pH of below 4.0; and
mixing the first solution with the second solution to form the complete formulation for preserving the function of a tissue or function.
A further aspect of the invention provides a method of preserving the function of a tissue or organ comprising:
providing a first solution wherein the first solution includes water, a balanced salt solution, a sugar, and L-arginine and has a pH of at least 7.0;
providing a second solution, wherein the second solution includes water, reduced glutathione, and ascorbic acid and has a pH of below 4.0;
mixing the first solution with the second solution to form the complete formulation for preserving the function of a tissue or function; and
contacting a tissue or organ with the complete formulation.

### BRIEF DESCRIPTION OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention.

FIG. 1 is a perspective view of a multi-chamber bag in accordance with embodiments of the invention.

FIG. 2 is a perspective view of a kit having a first container and a second container in accordance with embodiments of the invention.

### DETAILED DESCRIPTION

Unless defined otherwise, all technical and scientific terms used herein have the same meaning as commonly understood by one of ordinary skill in the art to which this invention belongs.

Although any methods and materials similar or equivalent to those described herein can be used in the practice or testing of the present invention, the preferred methods and materials are described. For the purposes of the present invention, the following terms are defined below.

As used herein, "organ" includes, but is not limited to, the heart, veins, arteries, lungs, liver, pancreas, and the kidneys. Portions of organ are also contemplated.

As used herein, "sterile water" includes but is not limited to, (a) sterile water for injection, USP, (b) sterile distilled deionized water, and (c) sterile water for irrigation.

As used herein, "anitoxidant" is a substance that, when present in a mixture or structure containing an oxidizable substrate biological molecule, delays or prevents oxidation of the substrate biological molecule. For example, ascorbic acid is an antioxidant.

As used herein, "balanced salt solution" is defined as an aqueous solution that is osmotically balanced to prevent acute cell or tissue damage.

As used herein, "physiological solution" is defined as an aqueous salt solution which is compatible with normal tissue by virtue of being isotonic with normal interstitial fluid.

As used herein, "graft" is defined as tissue that is transplanted or implanted in part of the body to repair a defect.

As used herein, "cardioplegia" includes but is not limited to, paralysis of the heart.

As used herein, "cellular reducing agent" is defined as a substance that loses electrons easily thereby causing other substance to be reduced chemically.

The present invention provides a two part tissue preservation kit which ultimately forms a GALA solution, including water, a balanced salt solution, a sugar, L-arginine, ascorbic acid and a cellular reducing agent such as reduced glutathione.

The stability of the GALA formulation can be improved by separating the formulation into a first solution having a pH of at least 7 and a second solution having a pH of less than 7. The first and second solutions are mixed together to form a final isotonic GALA formulation that can be used at a physiological pH of around pH 7.4 to preserve the function of the tissue or organ.

The first solution includes components with improved stability when stored at a pH of 7.0 or above. The first solution includes water, a balanced salt solution, a sugar such as a D-glucose, fructose or mannose and L-arginine. The balanced salt solution includes salts selected from the following: calcium chloride dihydrate, potassium chloride, potassium phosphate monobasic, magnesium chloride hexahydrate, magnesium sulfate heptahydrate, sodium chloride, sodium bicarbonate, sodium phosphate dibasic heptahydrate and combinations thereof. The balanced salt solution is provided at a concentration that will result in an isotonic solution when the first and second solutions are mixed together. In an exemplary embodiment, the balanced salt solution 0.14 grams/liter calcium chloride dihydrate, 0.4 grams/liter potassium chloride, 0.06 grams/liter potassium phosphate monobasic, 0.1 grams/liter magnesium chloride hexahydrate, 0.1 grams/liter magnesium sulfate heptahydrate, 8 grams/liter sodium chloride, 0.35 grams/liter sodium bicarbonate, and 0.05 grams/liter sodium phosphate dibasic heptahydrate.

The first solution has a pH of at least pH 7.0 and preferably a pH that ranges from pH 7.0 to pH 8.5. In a preferred embodiment, the first solution has a pH of at least pH 8.0 and preferably the pH is in a range from pH 8.0 to pH 8.5.

The second solution includes components with improved stability when stored at a pH below 7.0. The second solution consists of water, ascorbic acid, and reduced glutathione. The components of the second solution are provided in relative concentrations to result in an isotonic final formulation when the first solution is mixed with the second solution. In an exemplary embodiment, the second solution includes 0.3106 grams of reduced L-glutathione per 50 milliliters of water and 0.09 grams of L-ascorbic acid per 50 milliliters of water. The pH of the second solution is less than 7 and preferably from pH 6.9 to pH 2.7. In another preferred embodiment, the pH of the second solution is less than pH 4 and preferably from pH 4 to pH 2.7. In another embodiment, the pH of the second solution is in a range from pH 3.3 to pH 2.7 and preferably pH 3.

In an exemplary embodiment, the volumetric ratio between the first solution and the second solution is 19:1. In a preferred embodiment, 950 ml of the first solution is mixed with 50 ml of the second solution to result in the final formulation for preserving the function of a tissue or organ.

The first or second formulations may optionally include an anticoagulant in an amount sufficient to help prevent clotting of blood within the vasculature of a tissue or organ. Exemplary anticoagulants include heparin and hirudin, but other anticoagulants may be used. An exemplary embodiment includes heparin in concentration ranges from about 50 units/liter to about 250 units/liter.

During use, the first and second solutions are mixed together to form a final formulation that can be used at a physiological pH in a range between pH 7.2 and about pH 7.6 and preferably pH 7.4, to preserve the function of the tissue or organ. If the mixture of the first and second solutions does not have a physiological pH in a range between pH 7.2 and pH 7.6, the pH of the mixture can be adjusted with a base or acid to the physiological pH.

Embodiments of the invention may be provided in a kit wherein the first and second solutions are provided in separate compartments or containers that can be mixed at the point of use to result in the final formulation.

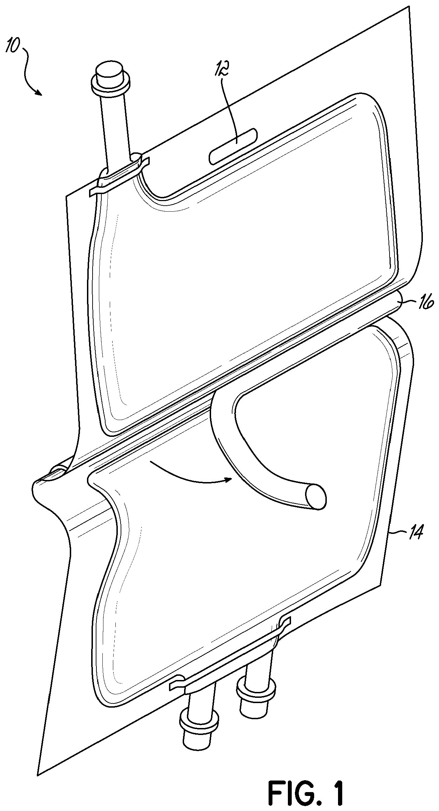

FIG. 1 illustrates a kit including an exemplary container 10 having a first compartment 12 separated from a second compartment 14 by a removable partition that includes a male member 16 and a female member 18. The first solution is maintained in one of the first 12 or second 14 compartments and the second solution is maintained in the other of the first 12 or second 14 compartments. The first and second solutions may be mixed by removing the removable partition, which results in the first and second compartments now forming a single compartment containing the final formulation for preserving tissue function. The mixture can then be used as needed.

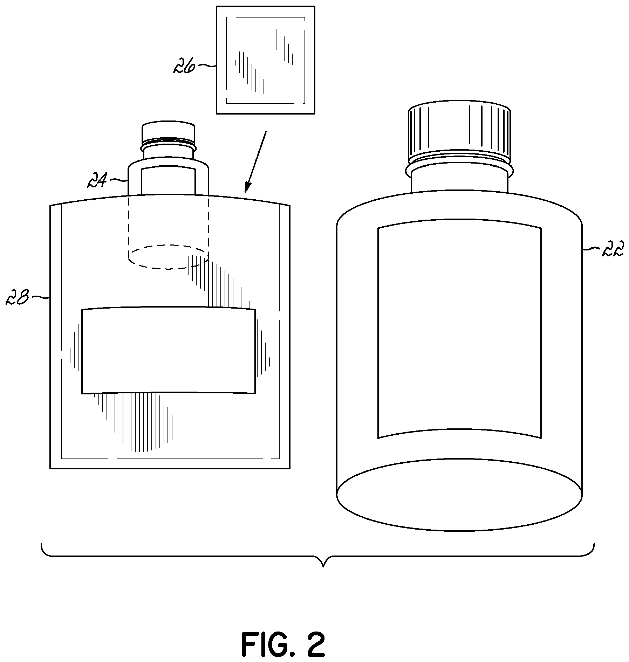

FIG. 2 illustrates an alternative kit having a first container 22 and a second container 24. The first solution is provided in the first container 22 and the second solution is provided in the second container 24. During use, the second solution is transferred from the second container 24 to the first container 22 where the first and second solutions are mixed to form the final formulation for preserving the function of a tissue or organ. The kit may optionally include a preservative, such as a oxygen absorber 26, and a pouch 28 for protecting and optionally storing one or both of the first 22 and second 24 containers. The kit may also optionally include a device, such as a syringe (not shown), for transferring the contents of one of the containers to the other container.

In the embodiment shown in Figure 2, the first solution is aseptically filled in the first container 24, such as a pre-sterilized Nalgene bottle, which is then secured with a pre-sterilized HDPE screw cap. The first container may be labeled Bottle A.

The second solution is aseptically filled into the second container 26, such as a pre-sterilized borosilicate, Type I, glass vial, which is secured with a pre-sterilized Stelmi septum, which is held in place with a tear-off seal. The tear-off seal is crimped to the bottle using a validated crimping process as the manufacturer's recommended crimp setting. The second container may be labeled Bottle B. Bottle B is de-gassed with Argon gas during the mixing and filling process to reduce the presence of oxygen. Bottle B is then placed in a pouch 28, such as a Mylar pouch filled with Argon gas and an oxygen absorber 28, to reduce oxygen exposure during its shelf life. The bottle and pouch are then labeled.

The first container 22 containing the first solution and the pouch 28 containing the second container containing the second solution are then placed in a package, such as a cardstock preprinted box. The package insert is also placed in the package and the box is sealed and labeled for distribution.

Exemplary embodiments of the kit will produce about 1 liter of the final formulation and will be in about 950 milliliters of the first solution and about 50 milliliters of the second solution. While it is expected that the mixture of the first and second solutions provided in the kit will result in a mixture having the desired physiological pH, the kits could optionally include a device for measuring the pH of the mixture, such as litmus paper, and a set of pH adjusting agents, i.e., a base (e.g., 84% aqueous solution of NaHCO₃) and an acid (e.g., 4N HCl), for adjusting the pH of the mixture to result in a final formulation having the desired physiological pH.

The following table provides an exemplary formulation to the first and second solutions.

**TABLE 1: FIRST SOLUTION (1x)**

| COMPONENT | AMOUNT (g/L) |
|---|---|
| Calcium chloride dehydrate | 0.14 |
| Potassium chloride | 0.4 |
| Potassium phosphate, monobasic | 0.06 |
| Magnesium chloride, hexahydrate | 0.10 |
| Magnesium sulfate, heptahydrate | 0.1 |
| Sodium chloride | 8.0 |
| Sodium bicarbonate | 0.35 |
| Sodium phosphate, dibasic heptahydrate | 0.050 |
| D-Glucose | 1.0 |
| L-Arginine | 0.15 |
| pH | 8.30±0.2 |
| Color | Clear |

Other salts can be used to provide the active ions as long as the final formulation formed from the mixture of the first and second solutions is isotonic.

**TABLE 2: SECOND SOLUTION (20x)**

| COMPONENT | CONCENTRATION (g/50mL) |
|---|---|
| L-Glutathione reduced | 0.3106 |
| L-Ascorbic acid | 0.09 |
| Water for Injection | 45 |
| Sterile Argon gas | Sat* |
| pH | 3.0±0.2 |
| Color | Clear |

The formulations and methods described herein are not limited to use with a particular tissue, organ, or cell type. For example, embodiments of the invention may be used with harvested saphenous veins, epigastric arteries, gastroepiploic arteries, and radial arteries used in coronary bypass grafting. Embodiments of the present invention may also be used to maintain organs and tissue during transplant operations. Is it contemplated that embodiments of the invention may be used with organs and tissues that include, but are not limited to, heart, lung, kidney, brain, muscle, grafts, skin, intestine, bone, teeth, appendages, eyes, and portions thereof. Embodiments of the invention may be used as an in situ tissue or organ preservative. Embodiments of the invention may also be used to wash or bathe tissues and organs that have not been removed from a subject. For example, embodiments of the invention may be used to maintain tissues and organs during cardioplegia. Embodiments of the invention may also be used in emergency procedures where a tissue or organ needs to be bathed in the formulations to preserve its function until surgery or other medical attention can be obtained. In this regard, embodiments of the invention may be available to emergency medical personnel both in hospital settings and "in the field" (i.e., in ambulances or temporary emergency medical facilities).

### EXAMPLE 1

The first and second solutions were prepared and the stability of the formulations evaluated.

The first solution was an aqueous solution that included components that are stable at a pH of 7 or higher. The first solution had a final volume of 950 milliliters and included a balanced salt solution and 1 gram per liter D-glucose, 0.15 grams per liter L-arginine and 950 milliliters of sterile water that had been saturated with argon gas. The balanced salt solution includes 0.14 gram/liter calcium chloride dihydrate, 0.4 grams/liter potassium chloride, 0.06 grams/liter potassium phosphate monobasic, 0.1 grams/liter magnesium chloride hexahydrate, 0.1 grams/liter magnesium sulfate heptahydrate, 8 grams/liter sodium chloride, 0.35 grams/liter sodium bicarbonate, and 0.05 grams/liter sodium phosphate dibasic heptahydrate. The final pH of the first solution was pH 8.3 ± 0.2.

The second solution was an aqueous solution that included components that are stable at a pH of less than 7. The second solution had a final volume of 50 milliliters and included 0.3106 grams of L-glutathione (reduced) and 0.09 grams L-ascorbic acid and 50 milliliters of sterile water. The final pH of the second solution was pH 3.0 ± 0.2.

The first and second solutions were mixed together and the pH was adjusted with an aqueous solution of 84% NaHCO₃ or 4 N HCl to pH 7.4 to form 1 liter of the final formulation.

### EXAMPLE 2

A second solution and the final formulation from Example 1 were analyzed to evaluate the stability of ascorbic acid and reduced glutathione over a period of time at room temperature.

The final formulation was formed by mixing together the first and second solutions and its pH was adjusted to 7.4. A separate volume of the second solution, which had a pH 3.0, was prepared both according to the procedure of Example 1. The stability of ascorbic acid and the stability of reduced glutathione were determined over a period of time in both solutions. Both the final formulation and the second solution were stored at room temperature.

The chromatography method developed and employed for this study separated the ascorbic acid and glutathione reproducibly and without any mutual interference between the components or their decomposition products. Two components were detected using electrospray spectrometry in +ve selected ion monitoring mode. In addition L-Ascorbic acid, and L-glutathione were also detected by photo diode array absorbing in the 190-400nm range. The integrated chromatographic intensities of each of the component peaks was a measure of its molar quantity in solution analyzed. The pH, conductivity, and osmolalities were also measured for each sample.

The stability indicating properties of GALA were evaluated at: 40°C ± 2°C / 75%RH±5% Relative Humidity (RH). A qualified stability chamber with uniform and constant temperature and relative humidity was used for storing the product containers. The chamber's thermometer and digital readout were recorded daily. Samples received for the proposed stability study were logged and tracked in a Sample Receipt and Storage Log and maintained at 2-8°C until the commencement of the study. A minimum of twenty one containers of the device from each representative batch of the first and second solutions were placed in the stability chamber maintained at 40°C±2°C / 75%RH±5% RH. This date was recorded as the zero time point. Three containers of each of the first and second solutions were pulled at 0, 5, 9, 15, 30, 50, and 80-day intervals from the stability chamber for testing.

The rate of decay of ascorbic acid in the second solution having a pH of 3.0 was about 3 mg per day, while the rate of decay of ascorbic acid in the final formulation having a pH of 7.4 was about 15 mg per day. The rate of decay of reduced glutathione in the second solution having a pH of 3.0 was about 3 mg per day, while the rate of decay of reduced glutathione in the final formulation having a pH of 7.4 was about 6 mg per day. These data demonstrate that the stabilities of both ascorbic acid and reduced glutathione are significantly increased when stored in a separate solution having a pH of 3.0 when compared to the stability of these compounds when stored in an aqueous solution having a pH of 7.4.

## Claims

1. A kit for preserving the function of a tissue or organ comprising:
a first container containing a first solution, wherein the first solution is comprised of water, a balanced salt solution, a sugar, and L-arginine and has a pH of at least 7.0;
a second container containing a second solution, wherein the second solution consists of water, reduced glutathione, and ascorbic acid and has a pH of below 4.0.

2. A kit according to claim 1 wherein the balanced salt solution includes salts selected from the group consisting of calcium chloride dihydrate, potassium chloride, potassium phosphate monobasic, magnesium chloride hexahydrate, magnesium sulfate heptahydrate, sodium chloride, sodium bicarbonate, sodium phosphate dibasic heptahydrate and combinations thereof.

3. A kit according to claim 1 of claim 2, wherein the balanced salt solution includes 0.14 gram/liter calcium chloride dihydrate, 0.4 grams/liter potassium chloride, 0.06 grams/liter potassium phosphate monobasic, 0.1 grams/liter magnesium chloride hexahydrate, 0.1 grams/liter magnesium sulfate heptahydrate, 8 grams/liter sodium chloride, 0.35 grams/liter sodium bicarbonate, and 0.05 grams/liter sodium phosphate dibasic heptahydrate.

4. A kit according to any previous claim, wherein the kit includes a single container comprising a first compartment and a second compartment, wherein the first compartment is the first container containing the first solution and the second compartment is the second container containing the second solution, wherein the first and second compartments are maintained as separate compartments by a partition that may be removed to allow the first and second solutions to mix to form a final formulation for preserving the function of a tissue or organ.

5. A kit according to any of claims 1 to 4, wherein the second solution includes 0.3106 grams of reduced L-glutathione per 50 milliliters of water and 0.09 grams of L-ascorbic acid per 50 milliliters of water.

6. A kit according to any of claims 1 to 5, wherein the volumetric ratio of the first solution to the second solution is 19:1.

7. A kit according to any of claims 1 to 6, wherein the pH of the first solution is in a range from pH 8 to pH 8.5.

8. A kit according to any of claims 1 to 7, wherein the pH of the second solution is in a range from pH 2.7 to pH 3.3.

9. A kit according to any of claims 1 to 7, wherein the pH of the mixture of the first solution with the second solution is in a range from pH 7.2 to pH 7.6.

10. A method of preparing a formulation for preserving the function of a tissue or organ comprising:
providing a first solution wherein the first solution includes water, a balanced salt solution, a sugar, and L-arginine and has a pH of at least 7.0;
providing a second solution, wherein the second solution consists of water, reduced glutathione, and ascorbic acid and has a pH of below 4.0; and
mixing the first solution with the second solution to form the complete formulation for preserving the function of a tissue or function.

11. A method according to claim 10, wherein the balanced salt solution includes salts selected from the group consisting of calcium chloride dihydrate, potassium chloride, potassium phosphate monobasic, magnesium chloride hexahydrate, magnesium sulfate heptahydrate, sodium chloride, sodium bicarbonate, sodium phosphate dibasic heptahydrate and combinations thereof.

12. A method according to claim 10 or claim 11, wherein the balanced salt solution includes 0.14 gram/liter calcium chloride dihydrate, 0.4 grams/liter potassium chloride, 0.06 grams/liter potassium phosphate monobasic, 0.1 grams/liter magnesium chloride hexahydrate, 0.1 grams/liter magnesium sulfate heptahydrate, 8 grams/liter sodium chloride, 0.35 grams/liter sodium bicarbonate, and 0.05 grams/liter sodium phosphate dibasic heptahydrate.

13. A method according to any of claims 10 to 12 further comprising:
providing a container having a first compartment and a second compartment that maintained as separate compartments by a partition, wherein the first compartment includes the first solution and the second compartment includes the second solution;
removing the partition to allow the first and second solutions to mix to form a complete formulation for preserving the function of a tissue or organ.

14. A method according to any of claims 10 to 12 further comprising:
providing a first container that includes the first solution;
providing a second container that includes the second solution;
mixing the contents of the second container with the contents of the first container to form a complete formulation for preserving the function of a tissue or organ.

15. A method according to any of claims 10 to 14, wherein the second solution includes 0.3106 grams of reduced L-glutathione per 50 milliliters of water and 0.09 grams of L-ascorbic acid per 50 milliliters of water.

16. A method according to any of claims 10 to 15, wherein the volumetric ratio of the first solution to the second solution is 19:1.

17. A method according to any of claims 10 to 16, wherein the pH of the first solution is in a range from pH 8 to pH 8.5.

18. A method according to any of claims 10 to 17, wherein the pH of the second solution is in a range from pH 2.7 to pH 3.3.

19. A method according to any of claims 10 to 18, wherein the pH of the mixture of the first solution with the second solution is in a range from pH 7.2 to pH 7.6.

20. A method of preserving the function of a tissue or organ comprising:
providing a first solution wherein the first solution includes water, a balanced salt solution, a sugar, and L-arginine and has a pH of at least 7.0;
providing a second solution, wherein the second solution includes water, reduced glutathione, and ascorbic acid and has a pH of below 4.0;
mixing the first solution with the second solution to form the complete formulation for preserving the function of a tissue or function; and
contacting a tissue or organ with the complete formulation.

## Patentansprüche

1. Kit zur Erhaltung der Funktion eines Gewebes oder Organs, umfassend:
einen ersten Behälter, der eine erste Lösung beinhaltet, wobei die erste Lösung Wasser, eine ausgewogene Salzlösung, einen Zucker und L-Arginin umfasst und einen pH-Wert von zumindest 7,0 aufweist;
einen zweiten Behälter, der eine zweite Lösung beinhaltet, wobei die zweite Lösung aus Wasser, reduziertem Glutathion und Abscorbinsäure besteht und einen pH-Wert unter 4,0 aufweist.

2. Kit nach Anspruch 1, wobei die ausgewogene Salzlösung Salze enthält, die aus der Gruppe bestehend aus Calciumchloriddihydrat, Kaliumchlorid, einbasischem Kaliumphosphat, Magnesiumchloridhexahydrat, Magnesiumsulfatheptahydrat, Natriumchlorid, Natriumbicarbonat, zweibasischem Natriumphosphatheptahydrat und Kombinationen davon ausgewählt sind.

3. Kit nach Anspruch 1 oder Anspruch 2, wobei die ausgewogene Salzlösung 0,14 Gramm/Liter Calciumchloriddihydrat, 0,4 Gramm/Liter Kaliumchlorid, 0,06 Gramm/Liter einbasisches Kaliumphosphat, 0,1 Gramm/Liter Magnesiumchloridhexahydrat, 0,1 Gramm/Liter Magnesiumsulfatheptahydrat, 8 Gramm/Liter Natriumchlorid, 0,35 Gramm/Liter Natriumbicarbonat und 0,05 Gramm/Liter zweibasisches Natriumphosphatheptahydrat enthält.

4. Kit nach einem der vorhergehenden Ansprüche, wobei das Kit einen einzelnen Behälter enthält, der eine erste Kammer und eine zweite Kammer umfasst, wobei die erste Kammer der erste Behälter, der die erste Lösung beinhaltet, ist und die zweite Kammer der zweite Behälter, der die zweite Lösung beinhaltet, ist, wobei die erste und zweite Kammer als getrennte Kammern durch eine Abtrennung gehalten werden, die entfernt werden kann, um zu ermöglichen, dass sich die erste und zweite Lösung mischen, um eine Endformulierung zur Erhaltung der Funktion eines Gewebes oder Organs zu bilden.

5. Kit nach einem der Ansprüche 1 bis 4, wobei die zweite Lösung 0,3106 Gramm des reduzierten L-Glutathion pro 50 Milliliter Wasser und 0,09 Gramm der L-Ascorbinsäure pro 50 Milliliter Wasser enthält.

6. Kit nach einem der Ansprüche 1 bis 5, wobei das Volumenverhältnis der ersten Lösung zur zweiten Lösung 19:1 beträgt.

7. Kit nach einem der Ansprüche 1 bis 6, wobei der pH-Wert der ersten Lösung in einem Bereich von pH-Wert 8 bis pH-Wert 8,5 liegt.

8. Kit nach einem der Ansprüche 1 bis 7, wobei der pH-Wert der zweiten Lösung in einem Bereich von pH-Wert 2,7 bis pH-Wert 3,3 liegt.

9. Kit nach einem der Ansprüche 1 bis 7, wobei der pH-Wert der Mischung der ersten Lösung mit der zweiten Lösung in einem Bereich von pH-Wert 7,2 bis pH-Wert 7,6 liegt.

10. Kit zum Herstellen einer Formulierung zur Erhaltung der Funktion eines Gewebes oder Organs, umfassend:
Bereitstellen einer ersten Lösung, wobei die erste Lösung Wasser, eine ausgewogene Salzlösung, einen Zucker und L-Arginin umfasst und einen pH-Wert von zumindest 7,0 aufweist;
Bereitstellen einer zweiten Lösung, wobei die zweite Lösung aus Wasser, reduziertem Glutathion und Abscorbinsäure besteht und einen pH-Wert unter 4,0 aufweist, und
Mischen der ersten Lösung mit der zweiten Lösung, um eine vollständige Formulierung zur Erhaltung der Funktion eines Gewebes oder Organs zu bilden.

11. Verfahren nach Anspruch 10, wobei die ausgewogene Salzlösung Salze enthält, die aus der Gruppe bestehend aus Calciumchloriddihydrat, Kaliumchlorid, einbasischem Kaliumphosphat, Magnesiumchloridhexahydrat, Magnesiumsulfatheptahydrat, Natriumchlorid, Natriumbicarbonat, zweibasischem Natriumphosphatheptahydrat und Kombinationen davon ausgewählt sind.

12. Verfahren nach Anspruch 10 oder Anspruch 11, wobei die ausgewogene Salzlösung 0,14 Gramm/Liter Calciumchloriddihydrat, 0,4 Gramm/Liter Kaliumchlorid, 0,06 Gramm/Liter einbasisches Kaliumphosphat, 0,1 Gramm/Liter Magnesiumchloridhexahydrat, 0,1 Gramm/Liter Magnesiumsulfatheptahydrat, 8 Gramm/Liter Natriumchlorid, 0,35 Gramm/Liter Natriumbicarbonat und 0,05 Gramm/Liter zweibasisches Natriumphosphatheptahydrat enthält.

13. Verfahren nach einem der Ansprüche 10 bis 12, ferner umfassend:
Bereitstellen eines Behälters, der eine erste Kammer und eine zweite Kammer aufweist, die als getrennte Kammern durch eine Abtrennung gehalten werden, wobei die erste Kammer die erste Lösung enthält und die zweite Kammer die zweite Lösung enthält;
Entfernen der Abtrennung, um zu ermöglichen, dass sich die erste und zweite Lösung mischen, um eine vollständige Formulierung zur Erhaltung der Funktion eines Gewebes oder Organs zu bilden.

14. Verfahren nach einem der Ansprüche 10 bis 12, ferner umfassend:
Bereitstellen eines ersten Behälters, der die erste Lösung enthält;
Bereitstellen eines zweiten Behälters, der die zweite Lösung enthält;
Mischen der Inhalte des zweiten Behälters mit den Inhalten des ersten Behälters, um eine vollständige Formulierung zur Erhaltung der Funktion eines Gewebes oder Organs zu bilden.

15. Verfahren nach einem der Ansprüche 10 bis 14, wobei die zweite Lösung 0,3106 Gramm des reduzierten L-Glutathion pro 50 Milliliter Wasser und 0,09 Gramm der L-Ascorbinsäure pro 50 Milliliter Wasser enthält.

16. Verfahren nach einem der Ansprüche 10 bis 15, wobei das Volumenverhältnis der ersten Lösung zur zweiten Lösung 19:1 beträgt.

17. Verfahren nach einem der Ansprüche 10 bis 16, wobei der pH-Wert der ersten Lösung in einem Bereich von pH-Wert 8 bis pH-Wert 8,5 liegt.

18. Verfahren nach einem der Ansprüche 10 bis 17, wobei der pH-Wert der zweiten Lösung in einem Bereich von pH-Wert 2,7 bis pH-Wert 3,3 liegt.

19. Verfahren nach einem der Ansprüche 10 bis 18, wobei der pH-Wert der Mischung der ersten Lösung mit der zweiten Lösung in einem Bereich von pH-Wert 7,2 bis pH-Wert 7,6 liegt.

20. Verfahren zur Erhaltung der Funktion eines Gewebes oder Organs, umfassend:
Bereitstellen einer ersten Lösung, wobei die erste Lösung Wasser, eine ausgewogene Salzlösung, einen Zucker und L-Arginin enthält und einen pH-Wert von zumindest 7,0 aufweist;
Bereitstellen einer zweiten Lösung, wobei die zweite Lösung Wasser, reduziertes Glutathion und Ascorbinsäure enthält und einen pH-Wert unter 4,0 aufweist;
Mischen der ersten Lösung mit der zweiten Lösung, um eine vollständige Formulierung zur Erhaltung der Funktion eines Gewebes oder Organs zu bilden; und Inkontaktbringen eines Gewebes oder Organs mit der vollständigen Formulierung.

## Revendications

1. Ensemble conçu pour préserver la fonction d'un tissu ou d'un organe, comprenant :
un premier récipient contenant une première solution, la première solution étant constituée d'eau, d'une solution saline équilibrée, d'un sucre et de L-arginine et ayant un pH d'au moins 7,0 ;
un deuxième récipient contenant une deuxième solution, la deuxième solution étant constituée d'eau, de glutathion réduit et d'acide ascorbique, et ayant un pH inférieur à 4,0.

2. Ensemble selon la revendication 1, dans lequel la solution saline équilibrée comprend des sels sélectionnés dans le groupe comprenant : chlorure de calcium dihydrate, chlorure de potassium, phosphate monobasique de potassium, dichlorure de magnésium hexahydrate, sulfate de magnésium heptahydrate, chlorure de sodium, bicarbonate de sodium, phosphate dibasique de sodium heptahydrate et des combinaisons de ceux-ci.

3. Ensemble selon la revendication 1 ou la revendication 2, dans lequel la solution saline équilibrée comprend 0,14 gramme/litre de chlorure de calcium dihydrate, 0,4 gramme/litre de chlorure de potassium, 0,06 gramme/litre de phosphate monobasique de potassium, 0,1 gramme/litre de dichlorure de magnésium hexahydrate, 0,1 gramme/litre de sulfate de magnésium heptahydrate, 8 grammes/litre de chlorure de sodium, 0,35 gramme/litre de bicarbonate de sodium et 0,05 gramme/litre de phosphate dibasique de sodium heptahydrate.

4. Ensemble selon l'une quelconque des revendications précédentes, l'ensemble comprenant un seul récipient comprenant un premier compartiment et un deuxième compartiment, le premier compartiment étant le premier récipient contenant la première solution et le deuxième compartiment étant le deuxième récipient contenant la deuxième solution, dans lequel les premier et deuxième compartiments sont maintenus séparés par une cloison qui peut être enlevée pour permettre aux première et deuxième solutions de se mélanger pour former une formulation finale pour préserver la fonction d'un tissu ou d'un organe.

5. Ensemble selon l'une quelconque des revendications 1 à 4, dans lequel la deuxième solution comprend 0,3106 gramme de L-glutathion réduit par 50 millilitres d'eau et 0,09 gramme d'acide L-ascorbique par 50 millilitres d'eau.

6. Ensemble selon l'une quelconque des revendications 1 à 5, dans lequel le rapport volumétrique de la première solution à la deuxième solution est 19:1.

7. Ensemble selon l'une quelconque des revendications 1 à 6, dans lequel le pH de la première solution est dans une gamme de pH 8 à pH 8,5.

8. Ensemble selon l'une quelconque des revendications 1 à 7, dans lequel le pH de la deuxième solution est dans une gamme de pH 2,7 à pH 3,3.

9. Ensemble selon l'une quelconque des revendications 1 à 7, dans lequel le pH du mélange de la première solution avec la deuxième solution est dans une gamme de pH 7,2 à pH 7,6.

10. Procédé de préparation d'une formulation pour préserver la fonction d'un tissu ou d'un organe, comprenant les étapes consistant à :
fournir une première solution, la première solution comprenant de l'eau, une solution saline équilibrée, un sucre et L-arginine, et ayant un pH d'au moins 7,0 ;
fournir une deuxième solution, la deuxième solution étant constituée d'eau, de glutathion réduit et d'acide ascorbique, et ayant un pH inférieur à 4,0 ; et
mélanger la première solution avec la deuxième solution pour former la formulation complète pour préserver la fonction d'un tissu ou d'une fonction.

11. Procédé selon la revendication 10, dans lequel la solution saline équilibrée comprend des sels sélectionnés dans le groupe comprenant : chlorure de calcium dihydrate, chlorure de potassium, phosphate monobasique de potassium, dichlorure de magnésium hexahydrate, sulfate de magnésium heptahydrate, chlorure de sodium, bicarbonate de sodium, phosphate dibasique de sodium heptahydrate et des combinaisons de ceux-ci.

12. Procédé selon la revendication 10 ou la revendication 11, dans lequel la solution saline équilibrée comprend 0,14 gramme/litre de chlorure de calcium dihydrate, 0,4 gramme/litre de chlorure de potassium, 0,06 gramme/litre de phosphate monobasique de potassium, 0,1 gramme/litre de dichlorure de magnésium hexahydrate, 0,1 gramme/litre de sulfate de magnésium heptahydrate, 8 grammes/litre de chlorure de sodium, 0,35 gramme/litre de bicarbonate de sodium et 0,05 gramme/litre de phosphate dibasique de sodium heptahydrate.

13. Procédé selon l'une quelconque des revendications 10 à 12 comprenant en outre les étapes consistant à :
fournir un récipient ayant un premier compartiment et un deuxième compartiment qui sont maintenus séparés par une cloison, le premier compartiment contenant la première solution et le deuxième compartiment contenant la deuxième solution ;
enlever la cloison pour permettre aux première et deuxième solutions de se mélanger pour former une formulation complète pour préserver la fonction d'un tissu ou d'un organe.

14. Procédé selon l'une quelconque des revendications 10 à 12, comprenant en outre les étapes consistant à :
fournir un premier récipient qui contient la première solution ;
fournir un deuxième récipient qui contient la deuxième solution ;
mélanger le contenu du deuxième récipient avec le contenu du premier récipient pour former une formulation complète pour préserver la fonction d'un tissu ou d'un organe

15. Procédé selon l'une quelconque des revendications 10 à 14, dans lequel la deuxième solution comprend 0,3106 gramme de L-glutathion réduit par 50 millilitres d'eau et 0,09 gramme d'acide L-ascorbique par 50 millilitres d'eau.

16. Procédé selon l'une quelconque des revendications 10 à 15, dans lequel le rapport volumétrique de la première solution à la deuxième solution est 19:1.

17. Procédé selon l'une quelconque des revendications 10 à 16, dans lequel le pH de la première solution est dans une gamme de pH 8 à pH 8,5.

18. Procédé selon l'une quelconque des revendications 10 à 17, dans lequel le pH de la deuxième solution est dans une gamme de pH 2,7 à pH 3,3.

19. Procédé selon l'une quelconque des revendications 10 à 18, dans lequel le pH du mélange de la première solution avec la deuxième solution est dans une gamme de pH 7,2 à pH 7,6.

20. Procédé pour préserver la fonction d'un tissu ou d'un organe, comprenant les étapes consistant à :
fournir une première solution, la première solution comprenant de l'eau, une solution saline équilibrée, un sucre et L-arginine, et ayant un pH d'au moins 7,0 ;
fournir une deuxième solution, la deuxième solution comprenant de l'eau, du glutathion réduit et de l'acide ascorbique, et ayant un pH inférieur à 4,0 ;
mélanger la première solution avec la deuxième solution pour former la formulation complète pour préserver la fonction d'un tissu ou d'une fonction ; et
mettre un tissu ou un organe en contact avec la formulation complète.
